# EUROPÄISCHE PATENTSCHRIFT

(11) **EP 1 302 052 B1**
(45) Veröffentlichungstag und Bekanntmachung des Hinweises auf die Patenterteilung: **24.03.2004**
(21) Anmeldenummer: 01955260.3
(22) Anmeldetag: 19.07.2001
(51) Int. Cl.: H04L 29/06

(54) **VERFAHREN ZUR BEREITSTELLUNG EINES PROGRAMMODULS IN EINEM KOMMUNIKATIONSSYSTEM**
METHOD FOR PROVIDING A PROGRAM MODULE IN A COMMUNICATIONS SYSTEM
PROCEDE DE MISE A DISPOSITION D'UN MODULE DE PROGRAMME DANS UN SYSTEME DE COMMUNICATION

(30) Priorität: 19.07.2000 DE 10035171
(43) Veröffentlichungstag der Anmeldung: 16.04.2003
(73) Patentinhaber: SIEMENS AKTIENGESELLSCHAFT, 80333 München (DE)
(72) Erfinder: BECHER, Reinhard, 81245 München (DE); DILLINGER, Markus, 81737 München (DE)
(86) Internationale Anmeldenummer: PCT/DE2001/002735
(87) Internationale Veröffentlichungsnummer: WO 2002/007406

(56) Entgegenhaltungen:
- EP-A- 0 778 512
- EP-A- 0 813 132

## Beschreibung

Die Erfindung betrifft ein Verfahren zur Bereitstellung eines Programmoduls in einem Kommunikationssystem, insbesondere in einem Funk-Kommunikationssystem.

In heutigen Computernetzwerken bedient man sich zur Bereitstellung von neuer Software, welche im allgemeinen auch als "Software-Upgrade" bezeichnet wird, häufig einer Client-Server-Struktur. Diese zeichnet sich durch einen hierarchischen Aufbau aus, wobei die Software auf einem übergeordneten "Server"-Computer gespeichert ist, welcher auf Anforderung von mit dem Server verbundenen "Client"-Computern diesen die benötigte Software zur Verfügung stellt.

Ausgehend von diesem Grundmodell, welches auch als Single-Server-Architektur bezeichnet wird, existieren weitere Abwandlungen, bei denen z.B. mehrere Server die Anfragen einer Vielzahl von untergeordneten Clients bearbeiten (Multi-Server-Architektur). Es können zur Zwischenspeicherung der Software auch sogenannte Proxy-Server eingesetzt werden, welche in der Hierarchie zwischen dem Client und dem Server angeordnet sind. Die von einem Client angeforderte Software wird bei dieser Architektur im Proxy-Server zwischengespeichert, so daß bei einer erneuten Anfrage eines anderen Clients die Software direkt von dem (in der Regel räumlich näher gelegenen) Proxy-Server angefordert werden kann. Diese Methode wird beispielsweise im Internet zur Zwischenspeicherung von häufig aufgerufenen Webseiten verwendet.

Auch in funkbasierten zellularen Kommunikationsnetzen, wie dem bereits existierenden GSM-Netz (Global System Mobile), dem geplanten UMTS-Netz (Universal Mobile Telecommunication System) als Mobilfunknetz der dritten Generation oder dem Hiperlan/2-System als zukünftiges Wireless-LAN-System besteht die Notwendigkeit, Software-Upgrades durchzuführen, z.B. ein Upgrade eines WAP (Wireless Application Protocol)-Browsers. Dabei kann die Software sowohl vom Hersteller einer Teilnehmerstation, von einem Netzwerkbetreiber oder auch von einem unabhängigen Serviceprovider bereitgestellt werden.

Bei diesen Verfahren wird zur sicheren Verteilung von Inhalten und Software bzw. Programmodulen eine Verschlüsselung der Verbindung zwischen dem Server und einem Client vorgesehen. Dabei werden nach dem Stand der Technik symmetrische oder asymmetrische Verfahren, wie beispielsweise PGP (Pretty Good Privacy) oder SSL (Secure Socket Layer) verwendet. Diese Verfahren können jedoch nachteilig eine Veränderung der Inhalte bzw. der Software durch Netzkomponenten, über die diese Informationen zum Teilnehmerendgerät übertragen werden, nicht verhindern.

In der EP 0813132 A2 wird ein Verfahren zur Verteilung eines Programmcodes beschrieben, bei dem durch eine vertrauenswürdige dritte Instanz ein Zertifikat für den Programmcode erstellt und gemeinsam mit dem Programmcode verteilt wird. Durch Überprüfung dieses Zertifikats kann ein empfangendes System die Integrität des Zertifikats und damit auch die Integrität des Programmcodes feststellen.

Aufgabe der Erfindung ist es daher, ein Verfahren zur Bereitstellung von Programmodulen in einem Kommunikationssystem zu verwirklichen, welches einen gesicherten Empfang der Programmodule durch eine Teilnehmerstation ermöglicht.

Diese Aufgabe wird durch ein Verfahren gemäß dem Patentanspruch 1 gelöst. Weiterbildungen der Erfindung sind den abhängigen Ansprüchen entnehmbar.

Die Erfindung wird anhand von in Figuren dargestellten Ausführungsbeispielen näher erläutert. Im einzelnen stellen dar:
- FIG 1: ein Blockschaltbild eines Kommunikationssystems, insbesondere eines Funk-Kommunikationssystems,
- FIG 2: eine Übertragung eines Programmoduls von einem Server zu einem Teilnehmerendgerät und zu einem weiteren Teilnehmerendgerät,
- FIG 3: eine Übertragung eines Programmoduls entsprechend FIG 2 mit einer erfindungsgemäßen Sicherheitsprüfung,
- FIG 4: eine Übertragung eines Programmoduls von einem Server zu einem Teilnehmerendgerät mit einer ersten Möglichkeit eines Sicherheitskonzepts, und
- FIG 5: eine Übertragung eines Programmoduls von einem Server zu einem Teilnehmerendgerät entsprechend FIG 4 mit einer zweiten Möglichkeit eines Sicherheitskonzepts.

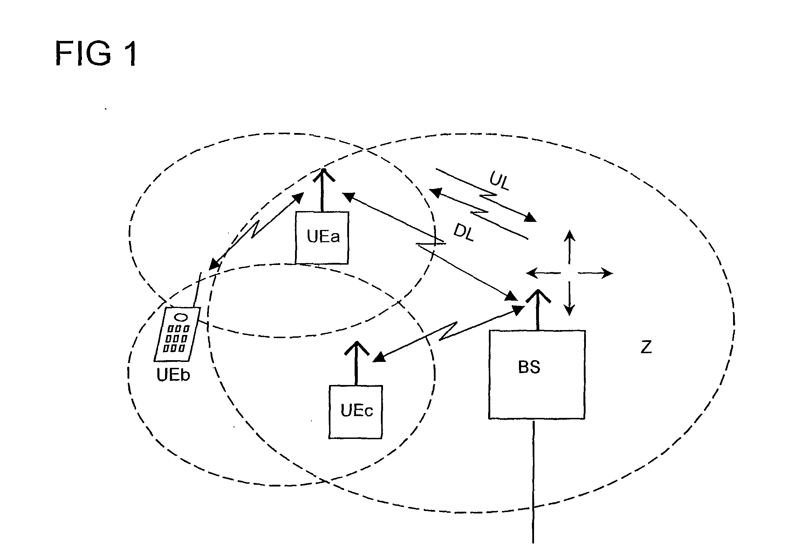

Die Figur 1 zeigt einen Ausschnitt eines Funk-Kommunikationssystems als Beispiel für ein Kommunikationssystem, in dem die Erfindung zur Anwendung kommen kann. In dem dargestellten Fall wird die Struktur eines HIPERLAN/2-Systems dargestellt. Ein derartiges System weist mehrere an ein IP-basiertes Backbone angeschlossene Basisstation BS auf. Diese Basisstationen BS dienen der Zuweisung von funktechnischen Ressourcen zu Teilnehmerendgeräten UE (User Equipment) zum Routen und Übertragen von ankommenden und abgehenden Datenpaketen (PDU Packet Data Unit) über eine Funkschnittstelle. Die Teilnehmerendgeräte UE sind dabei beispielsweise als Mobilstationen oder anderweitige mobile und stationäre Endgeräte verwirklicht. Durch jede Basisstation BS wird zumindest eine Funkzelle Z mit funktechnischen Ressourcen versorgt.

Wie beispielhaft in der Figur 1 dargestellt befindet sich das Teilnehmerendgerät UEb außerhalb der Funkzelle Z der Basisstation BS. In diesem Fall wäre nach dem Stand der Technik keine Versorgung dieses Teilnehmerendgerätes UEb mit funktechnischen Ressourcen durch die Basisstation BS möglich. Durch die Verwendung eines Teilnehmerendgeräts UEa, das sich in dem Versorgungsbereich der Basisstation BS aufhält, als eine Relaisstation im Sinne eines sogenannten Multihop-Systems, kann jedoch eine Signalübertragung in Aufwärtsrichtung UL (Uplink) und in Abwärtsrichtung DL (Downlink) ermöglicht werden. Dabei sendet die Relaisstation UEa die in der jeweiligen Übertragungsrichtung empfangenen Signale beispielsweise auf der gleichen Trägerfrequenz wie die Basisstation BS weiter. Wie beispielhaft dargestellt, formt jede Relaisstation UEa, UEc wiederum eine kleine Funkzelle, wodurch die effektive Ausdehnung der Funkzelle Z der Basisstation BS vergrößert wird. Ein

Wie bereits einleitend beschrieben wurde, bedient man sich in heutigen Computernetzwerken zur Bereitstellung von neuer Software, welche im allgemeinen auch als "Software-Upgrade" bezeichnet wird, häufig einer Client-Server-Struktur. Diese zeichnet sich durch einen hierarchischen Aufbau aus, wobei die Software auf einem übergeordneten "Server"-Computer gespeichert ist, welcher auf Anforderung von mit dem Server verbundenen "Client"-Computern diesen die benötigte Software zur Verfügung stellt.

Ausgehend von diesem Grundmodell, welches auch als Single-Server-Architektur bezeichnet wird, existieren weitere Abwandlungen, bei denen z.B. mehrere Server die Anfragen einer Vielzahl von untergeordneten Clients bearbeiten (Multi-Server-Architektur). Es können zur Zwischenspeicherung der Software auch sogenannte Proxy-Server eingesetzt werden, welche in der Hierarchie zwischen dem Client und dem Server angeordnet sind. Die von einem Client angeforderte Software wird bei dieser Architektur im Proxy-Server zwischengespeichert, so daß bei einer erneuten Anfrage eines anderen Clients die Software direkt von dem (in der Regel räumlich näher gelegenen) Proxy-Server angefordert werden kann. Diese Methode wird beispielsweise im Internet zur Zwischenspeicherung von häufig aufgerufenen Webseiten verwendet.

Auch in funkbasierten zellulären Kommunikationsnetzen, wie dem bereits existierenden GSM-Netz (Global System Mobile) oder dem geplanten UMTS-Netz (Universal Mobile Telecommunication System) als Mobilfunknetz der dritten Generation besteht die Notwendigkeit, Software-Upgrades durchzuführen, z.B. ein Upgrade eines WAP (Wireless Application Protocol)-Browsers. Dabei kann die Software sowohl vom Hersteller einer Teilnehmerstation, von einem Netzwerkbetreiber oder auch von einem unabhängigen Serviceprovider bereitgestellt werden.

Wird zum Software-Upgrade eine der eingangs beschriebenen Client-Server-Architekturen verwendet, bei denen die Software zentral auf Servern im Mobilfunknetz gespeichert ist und von dort aus an jede einzelne Teilnehmerstation übertragen wird, ergeben sich bei der grossen Anzahl von Teilnehmerstationen jedoch unakzeptable Wartezeiten.

Ferner ist in mobilen Kommunikationsnetzen im Gegensatz zu einem Festnetz keine Zuordnung eines Teilnehmerendgerätes zu einem Anschluß des Netzes möglich. Folglich muß bei einer zentralen Bereitstellung von Software durch einen übergeordneten Server (z.B. durch eine Basisstation) jedes Teilnehmerendgerät des Kommunikationsnetzes in regelmäßigen zeitlichen Abständen den jeweiligen Server befragen, ob neue Software zum Herunterladen vorliegt. Dies erzeugt eine zusätzliche Last.

Eine Möglichkeit zur Lösung dieses Problems ist die Realisierung des Software-Upgrades in der Art eines "Schneeball"-Systems. Jedes in einer Zelle eingebuchtes Teilnehmerendgerät, welches die Software bzw. das Programmodul gespeichert hat, kann diese an weitere in der Zelle eingebuchte Teilnehmerendgeräte übertragen. Jedes Teilnehmerendgerät ist somit sowohl Client als auch Server. Durch die unmittelbare Übertragung der Software von einem Teilnehmerendgerät zu einem oder mehreren weiteren Teilnehmerendgeräten kann eine nahezu exponentielle Verbreitung der Software erzielt werden. Entsprechend läßt sich die Zeit, nach der alle in einer Zelle eingebuchten Teilnehmerendgeräte über die Software verfügen können, um ein Vielfaches verringern.

Vorteilhaft werden weiterhin gegenüber einem hierarchischen Client-Server-System Ressourcen eingespart, da zu Beginn des Verfahrens die Software von nur einem Server auf ein Teilnehmerendgerät des Kommunikationssystems übertragen werden kann, welche die Software dann an die anderen Teilnehmerendgeräte des Systems weiterleiten kann.

Da die Software von einem Teilnehmerendgerät an ein weiteres Teilnehmerendgerät auf dem unmittelbaren Weg übertragen werden kann, und eine Netzeinrichtung nur Signalisierungsaufgaben übernimmt, werden zusätzlich Ressourcen geschont.

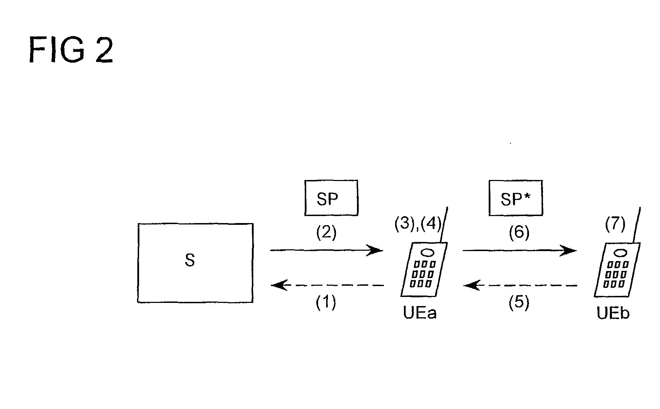

Als Problem tritt bei diesem Verfahren jedoch auf, daß der jeweilige Empfänger eines Programmoduls diese, beispielsweise nach einem Entpacken und Installieren, vor einer Übertragung zu einem weiteren Teilnehmerendgerät verändern kann. Diese Manipulationsmöglichkeit ist beispielhaft in der Figur 2 dargestellt.

Zwischen einem Server und einem ersten Teilnehmerendgerät UEa wird eine sichere Verbindung aufgebaut. Diese kann beispielsweise durch ein bekanntes Verschlüsselungsprogramm geschützt werden. In einem ersten Schritt (1) fordert das erste Teilnehmerendgerät ein Programmodul SP (Software Packet) an, welches in einem zweiten Schritt (2) zu dem ersten Teilnehmerendgerät UEa übertragen wird. Nach einem Entpacken und Installieren des Programmoduls SP kann dieses von dem ersten Teilnehmerendgerät UEa manipuliert und wiederum verpackt werden, Schritt (4). Fordert nun in einem fünften Schritt (5) ein weiteres Teilnehmerendgerät UEb das Programmodul bei dem ersten Teilnehmerendgerät UEa an, so versendet dieses das manipulierte Programmodul SP* zu dem weiteren Teilnehmerendgerät UEb, Schritt (6). Eine Installation dieses manipulierten Programmoduls SP*, Schritt (7), welches nunmehr beispielsweise einen Virus aufweist, kann in dem weiteren Teilnehmerendgerät UEb nachteilig zu Fehlfunktionen führen.

Erfindungsgemäß kann zur Lösung dieses Problems jedem Teilnehmerendgerät UE bzw. jedem Teilnehmer ein individueller Schlüssel PK (Private Key) zugeordnet werden, mittels dem beispielsweise eine jeweilige Prüfsumme berechnet werden kann. Dieser Schlüssel wird beispielsweise in einer Speichereinrichtung (SIM, UIM) des Teilnehmerendgerätes gespeichert und gegen unbefugtes Auslesen geschützt.

Zusätzlich zu der Speicherung des Schlüssels in dem Teilnehmerendgerät wird dieser in einer Sicherheitseinrichtung gespeichert. Diese Sicherheitseinrichtung kann beispielsweise entsprechend einer sogenannten Security Box SB, einem Trust Center TC oder einem Authentication Centers AC als eine Komponente des Kommunikationssystems oder unabhängig von diesem verwirklicht sein. Vorteilhaft wird die Sicherheitseinrichtung einem jeweiligen Provider, der die Programmodule zur Verfügung stellt, zugeordnet. Als Provider können beispielsweise Hersteller (Equipment Supplier), Betreiber (Operator), Diensteanbieter (Service Provider), Anwendungsanbieter (Application Provider) oder Inhalteanbieter (Content Provider) auftreten. Für die unterschiedlichen Provider kann ein individueller Schlüssel in dem Endgerät oder einem externen Speichermedium (ChiPKarte), das dem Teilnehmerendgerät zugeführt wird, gespeichert werden.

Zusätzlich kann auch die Adresse (E.164, URL, ...) für Routingzwecke in der Sicherheitseinrichtung gespeichert sein, wobei eine Speicherung der Adresse auch in dem Kommunikationssystem, beispielsweise gemeinsam mit dem Teilnehmerprofil gespeichert sein kann.

Wird beispielsweise ein Programmodul (Software-Update) von einem Hersteller (Siemens AG) bzw. dem Server des Herstellers unverschlüsselt oder verschlüsselt zu dem Teilnehmerendgerät übertragen. Nach einem Empfang des Programmoduls verwendet das Teilnehmerendgerät einen entsprechenden Schlüssel (des Herstellers), um mittels des Schlüssels und dem Programmodul eine Prüfsumme zu berechnen. Diese berechnete Prüfsumme wird zu der Sicherheitseinrichtung des Herstellers oder des Kommunikationssystems übertragen. Zusätzlich kann hierbei noch eine Teilnehmeridentifikation zur Identifizierung des Teilnehmers bzw. des Teilnehmerendgerätes übertragen werden. Diese Teilnehmeridentifikation kann in einem Mobilfunksystem beispielsweise die IMEI (International Mobile Equipment Identity) oder in einem anderen Kommunikationssystem ein eindeutiger symbolischer Name, beispielsweise die E-mail-Adresse, sein. In gleicher Weise kann gemeinsam mit dem Schlüssel auch die Adresse des Providers in dem Teilnehmerendgerät gespeichert sein.

Die Sicherheitseinrichtung berechnet mittels des hinterlegten Schlüssels und dem ebenfalls von dem Server empfangenen Programmoduls in gleicher Weise eine Prüfsumme. Anschließend werden die in der Sicherheitseinrichtung und die in dem Teilnehmerendgerät berechnete jeweilige Prüfsumme verglichen. Stimmen die Prüfsummen überein, so ist das Programmodul von dem Teilnehmerendgerät unverfälscht empfangen worden und kann anschließlich nach einer Bestätigung durch die Sicherheitseinrichtung in dem Teilnehmerendgerät installiert werden. Stimmen die Prüfsummen dagegen nicht überein, so hat die Teilnehmerstation ein fehlerbehaftetes oder verfälschtes Programmodul empfangen. Das Teilnehmerendgerät sieht daraufhin von einer Installation des Programmoduls ab und signalisiert gegebenenfalls der Sicherheitseinrichtung, von welcher Quelle bzw. von welchem Teilnehmerendgerät es dieses Programmodul empfangen hat. Der Inhaber der Sicherheitseinrichtung kann daraufhin bei Bedarf geeignete Schritte gegen die fehlerhafte Quelle, wie beispielsweise Sperren des Teilnehmerendgerätes, unternehmen.

Das erfindungsgemäße Verfahren bietet unter anderem folgende Vorteile:
- mögliche Nutzung von Security Algorithmen, wie sie heute bereits in Mobilfunksystemen zur Teilnehmerauthentifizierung genutzt werden zur Überprüfung von empfangenen Programmodulen auf Fehlerfreitheit,
- mögliche Nutzung von endgerätespezifischen Informationen, wie z.B. IMEI, zur Überprüfung von empfangenen Programmodulen auf Fehlerfreitheit,
- bekannter SSL-Mechansimus kann für die Vererbung von Programmodulen eingesetzt werden, wenn dies der Herausgeber wünscht, und
- der SSL Mechanismus kann ebenfalls für die Verteilung den Schlüsseln zur Prüfsummenberechnung verwendet werden, wenn der Schlüssel in dem Teilnehmerendgerät von Zeit zu Zeit aktualisiert werden soll, um die Sicherheit zu erhöhen.

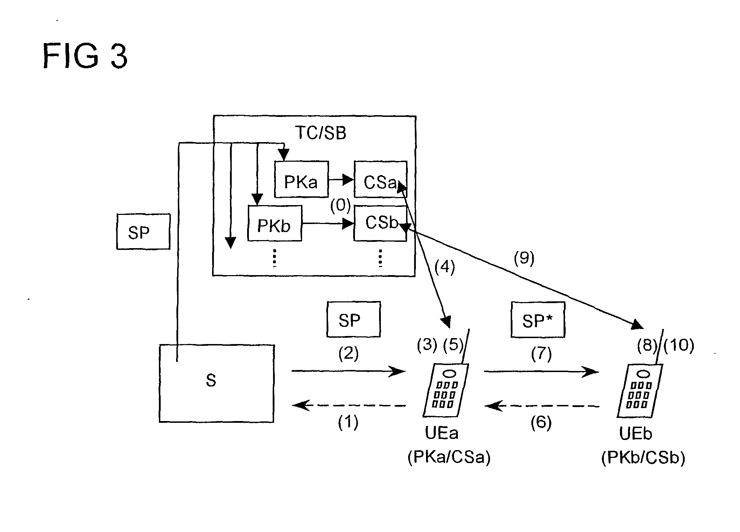

In der Figur 3 ist basierend auf der Figur 2 dargestellt, wie ein erfindungsgemäßes Sicherheitskonzept in einem beschriebenen Umfeld verwirklicht werden kann.

In einem ersten Schritt (1) wird von einem ersten Teilnehmerendgerät UEa ein Programmodul SP angefordert, welches in einem zweiten Schritt (2) von dem Server S zu dem ersten Teilnehmerendgerät UEa übertragen wird. In einem dritten Schritt (3) wird in dem ersten Teilnehmerendgerät UEa mittels des Programmoduls SP und einem ersten endgeräte- oder teilnehmerindividuellen Schlüssel PKa eine erste Prüfsumme CSa (Check Sum) berechnet. Diese berechnete Prüfsumme CSa wird zu der Sicherheitseinrichtung TC/SB und dort mit einer in einem initialen Schritt (0) in gleicher Weise berechneten Prüfsumme CSa verglichen. Die Übertragung der Prüfsumme zu der Sicherheitseinrichtung kann dabei verschlüsselt erfolgen. Wird von der Sicherheitseinrichtung TC/SB bestätigt, daß die Prüfsummen identisch sind, so signalisiert sie dieses dem ersten Teilnehmerendgerät UEa, welches anschließend in einem fünften Schritt (5) das Programmodul SP installiert.

Fordert nun in einem sechsten Schritt (6) ein zweites Teilnehmerendgerät UEb das Programmodul SP von dem ersten Teilnehmerendgerät UEa an, so überträgt dieses das Programmodul SP* in einem siebten Schritt (7) zu dem zweiten Teilnehmerendgerät UEb. Entsprechend dem dritten Schritt (3) wird in dem zweiten Teilnehmerendgerät UEb in einem achten Schritt (8) mittels des Programmoduls SP* und einem zweiten endgeräte- oder teilnehmerindividuellen Schlüssel PKb eine zweite Prüfsumme CSb berechnet, und nachfolgend zu der Sicherheitseinrichtung TC/SB übertragen, Schritt (9), wo wiederum ein Vergleich der Prüfsummen CSb erfolgt. Nach der Bestätigung der Übereinstimmung der Prüfsummen CSb erfolgt in einem zehnten Schritt (10) die Installation des Programmoduls SP* in dem zweiten Teilnehmerendgerät UEb.

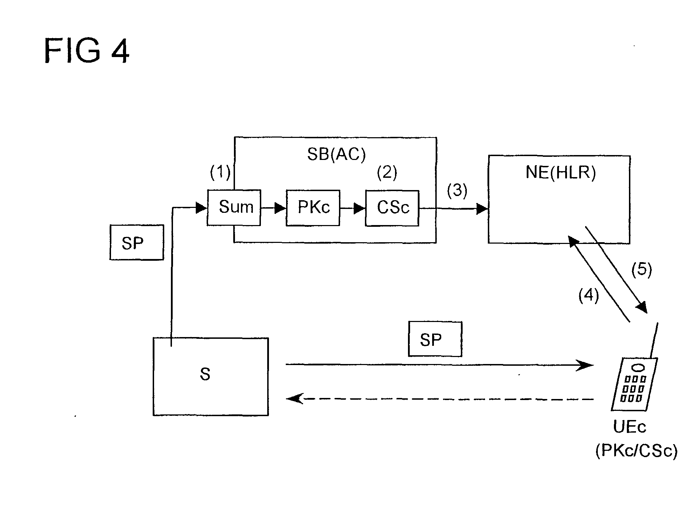

Anhand der Figur 4 wird beispielhaft erläutert, wie bekannte Sicherheitskomponenten eines Mobilfunksystems für das erfindungsgemäße Verfahren vorteilhaft genutzt werden können. In einem ersten Schritt (1) wird aus einem Programmodul SP in einer Einrichtung nach einem bekannten Verfahren eine Summe Sum berechnet. Die Einrichtung kann dabei in der Sicherheitseinrichtung SB, für den Fall eines Mobilfunksystems beispielsweise in dem zentralen Authentifizierungs-Center AC, oder getrennt zu der Sicherheitseinrichtung SB verwirklicht sein. Als Summe Sum kann beispielsweise auch ein komprimiertes Programmodul definiert sein. Mittels des standardisierten Schlüssels PKc (kc) wird in einem zweiten Schritt (2) eine Prüfsumme CSc berechnet, wobei die Berechnung entsprechend der Berechnung von RES und SRES in dem GSM-Mobilfunksystem erfolgen kann. Anschließend werden die Summe Sum und die Prüfsumme CSc zu einer zentralen Einrichtung NE des Kommunikationssystems, beispielsweise dem HLR (Home Location Register) oder VLR (Visitor Location Register) übertragen. Zusätzlich kann diesen Informationen eine jeweilige Information bzw. ein Indikator über das Programmodul SP und/oder über das Teilnehmerendgerät UEc bzw. den Teilnehmer zu der zentralen Einrichtung NE übertragen werden.

In dem Teilnehmerendgerät UEc wird in gleicher Weise aus dem Programmodul SP eine Summe erzeugt, und mittels der Summe un dem Schlüssel PKc eine Prüfsumme CSc berechnet. Die Prüfsumme CSc wird nachfolgend in einem vierten Schritt (4) zu der zentralen Einrichtung NE übertragen, wobei ebenfalls zusätzlich ein Indikator über das empfangene Programmodul SP mitübertragen wird. Wird in der zentralen Einrichtung NE eine Übereinstimmung der gespeicherten und der von dem Teilnehmerendgerät UEc gesendeten Prüfsummen CSc ermittelt, so kann das Programmodul SP nach einer entsprechenden Bestätigung durch die zentrale Einrichtung NE in dem Teilnehmerendgerät UEc installiert werden.

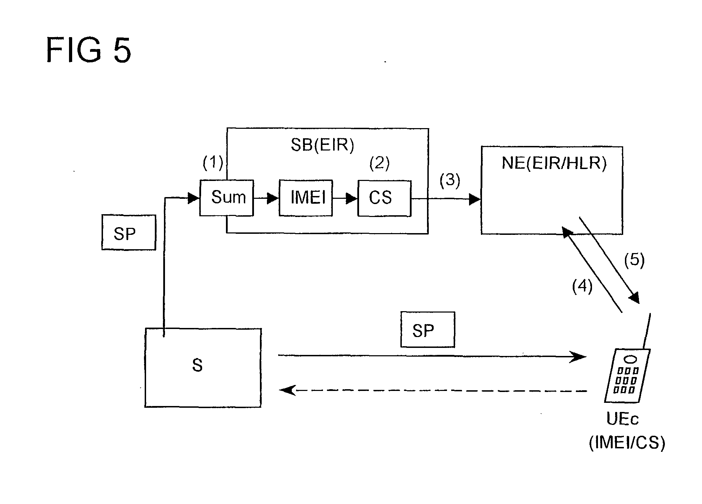

In der Figur 5 ist eine zu der Figur 4 alternative Realisierung des erfindungsgemäßen Sicherheitskonzepts dargestellt.

Hierbei wird im Unterschied die Prüfsumme CS aus der ermittelten Summe Sum und der aus dem GSM-Mobilfunksystem bekannten IMEI (International Mobile Equipment Identity) berechnet. In dem Teilnehmerendgerät UEc wird in gleicher Weise die IMEI zur Berechnung der Prüfsumme CS verwendet. Als zentrale Einrichtung NE zur Durchführung des Vergleiches der Prüfsummen CS kann in diesem Fall beispielsweise auch das EIR (Equipment Identification Register) genutzt werden, da der verwendete Schlüssel endgerätespezifisch ist.

## Patentansprüche

1. Verfahren zur Bereitstellung eines Programmoduls (SP) in einem Kommunikationssystem, bei dem
- von einem Server (S) das Programmodul (SP) vorgehalten wird,
- das Programmodul (SP) zu einem Teilnehmerendgerät (UEa, UEc) übertragen wird,
- in einer Sicherheitseinrichtung (TC, SB, AC) und in dem Teilnehmerendgerät (UEa, UEc) mittels des Programmoduls (SP) und eines individuellen Schlüssels (PKa, PKc) des Teilnehmerendgerätes (UEa, UEc) oder eines entsprechenden Teilnehmers jeweils ein Prüfkriterium (CSa) berechnet wird,
- der individuelle Schlüssel (PKa, PKc) in der Sicherheitseinrichtung (TC, SB, AC) und im Teilnehmerendgerät (UEa, UEc) identisch ist, und
- aus einem Vergleich der Prüfkriterien (CSa, CSc) ermittelt wird, ob das Programmodul (SP) fehlerbehaftet von dem Teilnehmerendgerät (UEa, UEc) empfangen wurde.

2. Verfahren nach Anspruch 1, bei dem
bei der Übertragung des Programmoduls (SP) zu dem Teilnehmerendgerät (UEa, UEc) ein Verschlüsselungsverfahren verwendet wird.

3. Verfahren nach Anspruch 1 oder 2, bei dem
das Programmodul (SP) in dem Teilnehmerendgerät (UEa, UEc) nur installiert wird, wenn es fehlerfrei empfangen wurde.

4. Verfahren nach einem vorhergehenden Anspruch, bei dem
das von dem Teilnehmerendgerät (UEa, UEc) empfangene Programmodul (SP) zu einem weiteren Teilnehmerendgerät (UEb) übertragen wird, wobei mittels eines weiteren individuellen Schlüssels (PKb) und einer Berechnung eines weiteren Prüfkriteriums (CSb) ermittelt wird, ob das Programmodul (SP) fehlerbehaftet von dem weiteren Teilnehmerendgerät (UEc) empfangen wurde.

5. Verfahren nach einem vorhergehenden Anspruch, bei dem
für den Fall, daß das Programmodul (SP) fehlerbehaftet empfangen wurde, in der Sicherheitseinrichtung (TC, SB, AC) eine Kennung des Absenders des Programmoduls (SP) gespeichert wird.

6. Verfahren nach einem vorhergehenden Anspruch, bei dem
der Schlüssel (PKa, PKb, PKc) endgeräte- oder teilnehmerindividuell definiert wird.

7. Verfahren nach einem vorhergehenden Anspruch, bei dem
der Schlüssel (PKa, PKb, PKc) in der Sicherheitseinrichtung (TC, SB, AC) gespeichert wird.

8. Verfahren nach einem vorhergehenden Anspruch, bei dem
der Vergleich der Prüfkriterien (CSa, CSb, CSc) in einer zentralen Einrichtung (NE, HLR, EIR) des Kommunikationssystems durchgeführt wird, wobei das in dem Teilnehmerendgerät (UEa, UEb, UEc) ermittelte Prüfkriterium (CSa, CSb, CSc) zu der zentralen Einrichtung (NE, HLR, EIR) übertragen wird.

9. Verfahren nach dem vorhergehenden Anspruch, bei dem
von dem Teilnehmerendgerät (UEa, UEb, UEc) gemeinsam mit dem Prüfkriterium (CSa, CSb, CSc) eine Programmodulkennung zu der zentralen Einrichtung (NE, HLR, EIR) übertragen wird.

10. Verfahren nach einem vorhergehenden Anspruch, bei dem das Kommunikationssystem als ein zellulares Funk-Kommunikationssystem, und das Teilnehmerendgerät (UEa, UEb, UEc) als eine stationäre oder mobile Funkstation ausgestaltet sind.

11. Kommunikationssystem mit einem Server (S), einer übertragungseinrichtung, einer Sicherheitseinrichtung(TC, SB, AC), einem Teilnehmerendgerät und einer zentralen Einrichtung bei dem
- der Server (S) derart ausgebildet ist, dass er ein Programmodul (SP) vorhält,
- die übertragungseinrichtung derart ausgebildet ist, dass sie das Programmodul (SP) zu dem Teilnehmerendgerät (UEa, UEc) überträgt,
- die Sicherheitseinrichtung (TC, SB, AC) und das Teilnehmerendgerät (UEa, UEc) derart ausgebildet sind, dass sie mittels des Programmoduls (SP) und eines individuellen Schlüssels (PKa, PKc) des Teilnehmerendgerätes (UEa, UEc) oder eines entsprechenden Teilnehmers jeweils ein Prüfkriterium (CSa) berechnen, wobei der individuelle Schlüssel (PKa, PKc) in der Sicherheitseinrichtung (TC, SB, AC) und im Teilnehmerendgerät (UEa, UEc) identisch ist, und
- die zentrale Einrichtung (NE) derart ausgebildet ist, dass sie aus einem Vergleich der Prüfkriterien (CSa, CSc) ermittelt, ob das Programmodul (SP) fehlerbehaftet von dem Teilnehmerendgerät (UEa, UEc) empfangen wurde.

## Claims

1. Method for providing a program module (SP) in a communications system, in which
- the program module (SP) is made available by a server (S),
- the program module (SP) is transmitted to a subscriber terminal (UEa, UEc),
- a checking criterion (CSa) is in each case calculated in a security device (TC, SB, AC) and in the subscriber terminal (UEa, UEc) by means of the program module (SP) and an individual key (PKa, PKc) of the subscriber terminal (UEa, UEc) or of a corresponding subscriber,
- the individual key (PKa, PKc) in the security device (TC, SB, AC) and in the subscriber terminal (UEa, UEc) is identical, and
- the checking criteria (CSa, CSc) are compared in order to determine whether the program module (SP) has been received with errors by the subscriber terminal (UEa, UEc).

2. Method according to Claim 1, in which
a scrambling method is used for the transmission of the program module (SP) to the subscriber terminal (UEa, UEc).

3. Method according to Claim 1 or 2, in which
the program module (SP) is installed in the subscriber terminal (UEa, UEc) only if it has been received without errors.

4. Method according to one of the preceding claims, in which
the program module (SP) which is received by the subscriber terminal (UEa, UEc) is transmitted to a further subscriber terminal (UEb), with a further individual key (PKb) and a calculation of a further checking criterion (CSb) being used to determine whether the program module (SP) has been received without any errors by the further subscriber terminal (UEc).

5. Method according to one of the preceding claims, in which, in the situation where the program module (SP) has been received with errors, an identifier of the sender of the program module (SP) is stored in the security device (TC, SB, AC).

6. Method according to one of the preceding claims, in which
the key (PKa, PKb, PKc) is defined on a terminal- or subscriber-specific basis.

7. Method according to one of the preceding claims, in which
the key (PKa, PKb, PKc) is stored in the security device (TC, SB, AC).

8. Method according to one of the preceding claims, in which
the comparison of the checking criteria (CSa, CSb, CSc) is carried out in a central device (NE, HLR, EIR) in the communications system, with the checking criterion (CSa, CSb, CSc) which is determined in the subscriber terminal (UEa, UEb, UEc) being transmitted to the central device (NE, HLR, EIR).

9. Method according to one of the preceding claims, in which,
together with the checking criterion (CSa, CSb, CSc), the subscriber terminal (UEa, UEb, UEc) transmits a program module identifier relating to the central device (NE, HLR, EIR).

10. Method according to one of the preceding claims, in which the communications system is in the form of a cellular radio communications system, and the subscriber terminal (UEa, UEb, UEc) is in the form of a stationary or mobile radio station.

11. Communications system having a server (S), having a security device (TC, SB, AC), having a subscriber terminal and having a central device, in which
- the server (S) is designed such that it makes a program module (SP) available,
- the transmission device is designed such that it transmits the program module (SP) to the subscriber terminal (UEa, UEc),
- the security device (TC, SB, AC) and the subscriber terminal (UEa, UEc) are designed such that they use the program module (SP) and an individual key (PKa, PKc) of the subscriber terminal (UEa, UEc) or of a corresponding subscriber to in each case calculate a checking criterion (CSa), with the individual key (PKa, PKc) in the security device (TC, SB, AC) and in the subscriber terminal (UEa, UEc) being identical, and
- the central device (NE) being designed such that it uses a comparison of the checking criteria (CSa, CSc) to determine whether the program module (SP) has been received with errors by the subscriber terminal (UEa, UEc).

## Revendications

1. Procédé de mise à disposition d'un module de programme (SP) dans un système de communication, dans lequel
- le module de programme (SP) est mis à disposition par un serveur (S),
- le module de programme (SP) est transmis à un terminal d'abonné (UEa, UEc),
- un critère de vérification (CSa) est calculé à chaque fois dans un dispositif de sécurité (TC, SB, AC) et dans le terminal d'abonné (UEa, UEc) au moyen du module de programme (SP) et d'une clé individuelle (PKa, PKc) du terminal d'abonné (UEa, UEc) ou d'un abonné correspondant,
- la clé individuelle (PKa, PKc) est identique dans le dispositif de sécurité (TC, SB, AC) et dans le terminal d'abonné (UEa, UEc) et
- on détermine, en comparant les critères de vérification (CSa, CSc), si le module de programme (SP) comportait une erreur lorsqu'il a été reçu par le terminal d'abonné (UEa, UEc).

2. Procédé selon la revendication 1, dans lequel un procédé de chiffrement est utilisé lors de la transmission du module de programme (SP) au terminal d'abonné (UEa, UEc).

3. Procédé selon la revendication 1 ou 2, dans lequel le module de programme (SP) n'est installé dans le terminal d'abonné (UEa, UEc) que s'il a été reçu sans erreur.

4. Procédé selon l'une des revendications précédentes, dans lequel le module de programme (SP) reçu par le terminal d'abonné (UEa, UEc) est transmis à un autre terminal d'abonné (UEb), une détermination ayant lieu, au moyen d'une autre clé individuelle (PKb) et du calcul d'un autre critère de vérification (CSb), pour savoir si le module de programme (SP) comportait une erreur lorsqu'il a été reçu par l'autre terminal d'abonné (UEc).

5. Procédé selon l'une des revendications précédentes, dans lequel un indicatif de l'expéditeur du module de programme (SP) est enregistré dans le dispositif de sécurité (TC, SB, AC) pour le cas où le module de programme (SP) comporte une erreur au moment de sa réception.

6. Procédé selon l'une des revendications précédentes, dans lequel la clé (PKa, PKb, PKc) est définie de manière individuelle pour chaque terminal ou abonné.

7. Procédé selon l'une des revendications précédentes, dans lequel la clé (PKa, PKb, PKc) est enregistrée dans le dispositif de sécurité (TC, SB, AC).

8. Procédé selon l'une des revendications précédentes, dans lequel la comparaison des critères de vérification (CSa, CSb, CSc) est exécutée dans un dispositif central (NE, HLR, EIR) du système de communication, le critère de vérification (CSa, CSb, CSc) déterminé dans le terminal d'abonné (UEa, UEb, UEc) étant transmis au dispositif central (NE, HLR, EIR).

9. Procédé selon l'une des revendications précédentes, dans lequel le terminal d'abonné (UEa, UEb, UEc) transmet au dispositif central (NE, HLR, EIR) un indicatif du module de programme en même temps que le critère de vérification (CSa, CSb, CSc).

10. Procédé selon l'une des revendications précédentes, dans lequel le système de communication est exécuté en tant que système de radiocommunication cellulaire et le terminal d'abonné (UEa, UEb, UEc) en tant que station radio fixe ou mobile.

11. Système de communication comprenant un serveur (S), un dispositif de transmission, un dispositif de sécurité (TC, SB, AC), un terminal d'abonné et un dispositif central, dans lequel
- le serveur (S) est exécuté de manière à mettre à disposition un module de programme (SP),
- le dispositif de transmission est exécuté de manière à transmettre le module de programme (SP) au terminal d'abonné (UEa, UEc),
- le dispositif de sécurité (TC, SB, AC) et le terminal d'abonné (UEa, UEc) sont exécutés de manière à calculer à chaque fois un critère de vérification (CSa) au moyen du module de programme (SP) et d'une clé individuelle (PKa, PKc) du terminal d'abonné (UEa, UEc) ou d'un abonné correspondant, la clé individuelle (PKa, PKc) étant identique dans le dispositif de sécurité (TC, SB, AC) et dans le terminal d'abonné (UEa, UEc) et
- le dispositif central (NE) est exécuté de manière à déterminer, par la comparaison des critères de vérification (CSa, CSc), si le module de programme (SP) comportait une erreur lorsqu'il a été reçu par le terminal d'abonné (UEa, UEc).
